# EUROPEAN PATENT SPECIFICATION

(11) **EP 3 508 764 B1**
(45) Date of publication and mention of the grant of the patent: **02.07.2025**
(21) Application number: 17846519.1
(22) Date of filing: 29.08.2017
(51) Int. Cl.: F16K 3/26, F16K 11/07, F16K 31/06

(54) **SPOOL VALVE, AND VALVE SYSTEM**
SPULENVENTIL UND VENTILSYSTEM
DISTRIBUTEUR À TIROIR CYLINDRIQUE ET SYSTÈME DE DISTRIBUTEUR

(30) Priority: 31.08.2016 JP 2016169776
(43) Date of publication of application: 10.07.2019
(73) Proprietor: Nabtesco Corporation, Tokyo 102-0093 (JP)
(72) Inventor: IWASAKI Hitoshi, Kobe-shi Hyogo 651-2413 (JP)
(74) Representative: Grünecker Patent- und Rechtsanwälte PartG mbB
(86) International application number: PCT/JP2017/031031
(87) International publication number: WO 2018/043514

(56) References cited:
- EP-A1- 2 642 506
- CN-A- 104 329 487
- CN-A- 104 329 487
- CN-A- 104 500 478
- CN-B- 104 500 478
- CN-U- 203 099 038
- US-A- 5 996 464
- US-A- 6 029 703

## Description

### TECHNICAL FIELD

The present invention relates to a spool valve and a valve system.

### BACKGROUND

In conventional spool valves, a spool is moved according to whether or not a pilot pressure acts thereon. The conventional spool valves are configured such that a pilot pressure acts from a direction different from the direction of action of a load pressure (a direction perpendicular to the direction of action of a load pressure) so as to control movement of the spool (see, for example, Patent Literature 1).

However, for example, a fluid apparatus having the conventional spool valve, in which a pilot pressure is supplied from a direction perpendicular to the direction of action of a load pressure, unfavorably requires a large space and has a large size. In other cases, the direction of action of the pilot pressure needs to be opposite to the direction of action of the load pressure due to requirements related to layout of a fluid apparatus.

It is also possible that the direction of action of the pilot pressure is opposite to the direction of action of the load pressure on the spool, and the ratio between these pressures determines the area of a surface acted on by the pilot pressure and the area of a surface acted on by the load pressure. However, a pilot pressure is typically very small as compared to a load pressure. Therefore, it is impractical to attempt to balance the pilot pressure and the load pressure by adjusting the area of the surface acted on by the load pressure and the area of the surface acted on by the pilot pressure, because such a fluid apparatus has a very large structure.

### RELEVANT REFERENCES

### LIST OF RELEVANT PATENT LITERATURE

Patent Literature 1: Japanese Patent Application Publication No. Hei 4-54111 A spool valve as described in the preamble of claim 1 is already known from US 6 029 703 A. CN 203 099 038 U discloses a similar spool valve as described in the preamble of claim 1.

The present invention addresses the above drawbacks, and one object thereof is to provide a spool valve and a valve system having a small size and configured such that the direction of action of the pilot pressure can be opposite to the direction of action of the load pressure.

The above and other objects of the invention are achieved by the spool valve according to claim 1 and the valve system according to claim 5. Preferred embodiments are claimed in the dependent claims.

### SUMMARY

The present invention is a spool valve comprising: a valve body; and a spool housed in the valve body so as to be movable in an axial direction, the spool having a load pressure acting surface and a pilot pressure acting surface, the load pressure acting surface being formed on one axial end side of the spool and configured to be acted on by a load pressure, the pilot pressure acting surface being formed on another axial end side of the spool and configured to be acted on by a pilot pressure, wherein the spool includes a spool body and a shoulder radially enlarged from the spool body, the shoulder has a first acting surface positioned on the other axial end side and a second acting surface positioned on the one axial end side, and the spool has a first communication hole and a second communication hole formed therein, the first communication hole communicating between the load pressure acting surface and the first acting surface of the shoulder, the second communication hole communicating between the pilot pressure acting surface and the second acting surface of the shoulder.

An area of the load pressure acting surface is equal to an area of the first acting surface of the shoulder.

An area of the pilot pressure acting surface is smaller than an area of the second acting surface of the shoulder.

The present invention is the spool valve, wherein when the pilot pressure acts on the pilot pressure acting surface, the pilot pressure acts on the second acting surface of the shoulder to move the spool toward the other axial end side.

The present invention is the spool valve, further comprising a first biasing member for pressing the spool toward the one axial end side.

The present invention is a valve system comprising: the spool valve; and an electromagnetic proportional valve connected to the other axial end side of the spool valve and configured to cause the pilot pressure to act on the pilot pressure acting surface of the spool valve.

The present invention is the valve system, wherein the electromagnetic proportional valve includes an electromagnetic proportional valve body, an electromagnetic proportional valve spool, and a drive device, the electromagnetic proportional valve spool being housed in the electromagnetic proportional valve body so as to be movable in the axial direction, and the drive device being disposed on the electromagnetic proportional valve body so as to be movable in the axial direction, and the drive device being disposed on the electromagnetic proportional valve body and configured to press the electromagnetic proportional valve spool toward the one axial end side, and the spool of the spool valve and the electromagnetic proportional valve spool of the electromagnetic proportional valve are connected together by a second biasing member.

The present invention provides a spool valve and a valve system having a small size and configured such that the direction of action of the pilot pressure can be opposite to the direction of action of the load pressure.

### BRIEF DESCRIPTION OF THE DRAWINGS

Fig. 1 is a sectional view showing a spool valve according to a first embodiment of the present invention, in which a spool of the spool valve is in a neutral position.
Fig. 2 is a sectional view showing the spool valve according to the first embodiment of the present invention, in which the spool of the spool valve is in a supply position.
Fig. 3 is a sectional view showing a spool valve according to a variation of the first embodiment of the present invention, in which the spool of the spool valve is in a neutral position.
Fig. 4 is a sectional view showing a valve system according to a second embodiment of the present invention, in which an electromagnetic proportional valve spool of an electromagnetic proportional valve is in a discharge position.
Fig. 5 is a sectional view showing the valve system according to the second embodiment of the present invention, in which the electromagnetic proportional valve spool of the electromagnetic proportional valve is in a supply position.
Fig. 6 is a sectional view showing the valve system according to the second embodiment of the present invention, in which the electromagnetic proportional valve spool of the electromagnetic proportional valve is in a neutral position.
Fig. 7 is a sectional view showing a valve system according to a third embodiment of the present invention, in which a spool of a spool valve is in a neutral position and an electromagnetic proportional valve spool of an electromagnetic proportional valve is in a discharge position.
Fig. 8 is a sectional view showing the valve system according to the third embodiment of the present invention, in which the spool of the spool valve is in the neutral position and the electromagnetic proportional valve spool of the electromagnetic proportional valve is in a neutral position.
Fig. 9 is a sectional view showing the valve system according to the third embodiment of the present invention, in which the spool of the spool valve is in a supply position and the electromagnetic proportional valve spool of the electromagnetic proportional valve is in a supply position.
Fig. 10 is a sectional view showing the valve system according to the third embodiment of the present invention, in which the spool of the spool valve is in the supply position and the electromagnetic proportional valve spool of the electromagnetic proportional valve is in the discharge position.

### DESCRIPTION OF THE EMBODIMENTS

### First Embodiment

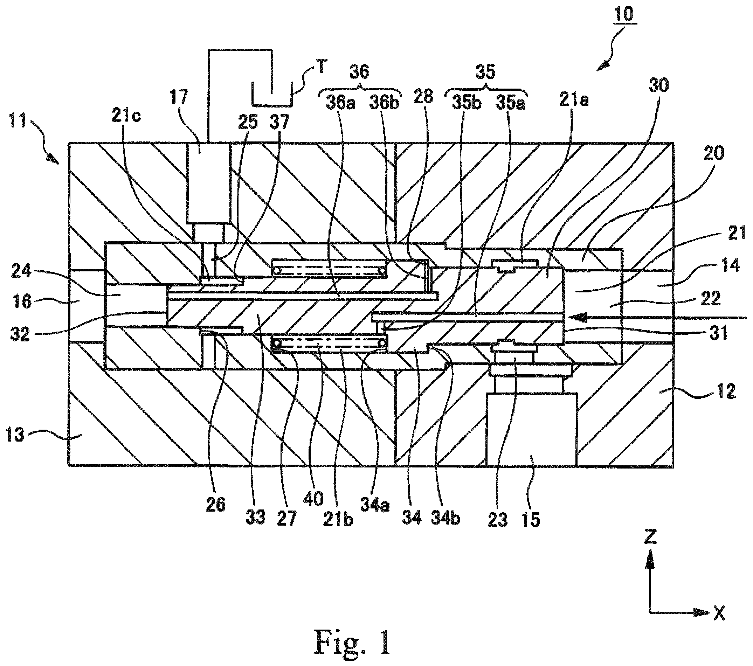

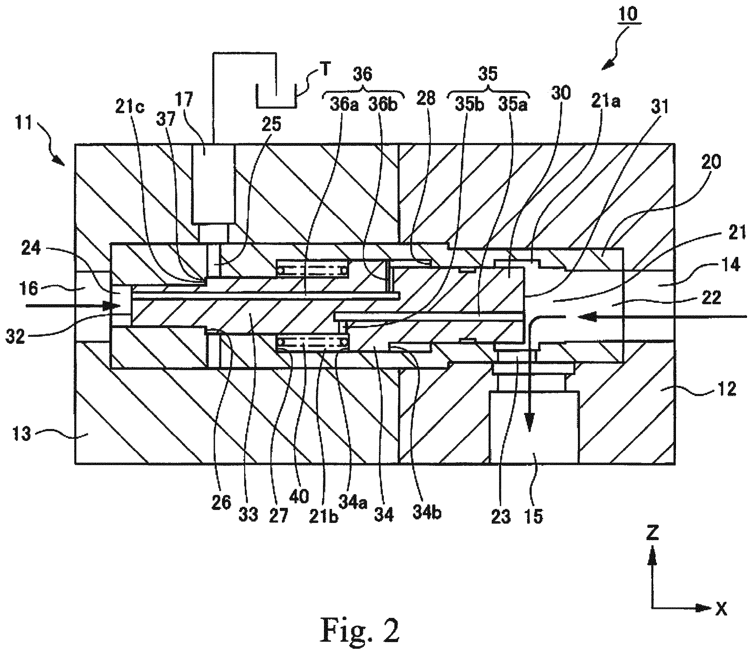

The first embodiment of the present invention will now be described with reference to Figs. 1 and 2. Figs. 1 and 2 are sectional views showing a spool valve according to the embodiment. Fig. 1 shows the case where a spool is in a neutral position, and Fig. 2 shows the case where the spool is in a supply position.

As shown in Figs. 1 and 2, the spool valve (spool cartridge valve) 10 according to the embodiment includes a valve body 20 having a cylindrical shape and a spool 30 housed in the valve body 20 so as to be movable in the axial direction.

In this specification, "the axial direction" refers to the direction of the central axis of the spool 30 (the longitudinal direction of the spool 30, or the direction X), "one axial end side" refers to the side of the spool 30 having a load pressure applied thereto (the positive side in the direction X), and "the other axial end side" refers to the side of the spool 30 having a pilot pressure applied thereto (the negative side in the direction X).

The valve body 20 has a spool receiving hole 21 that receives the spool 30 and extends in the axial direction. A pressure source port 22 is disposed in the one axial end side of the valve body 20. The pressure source port 22 receives the flow of a working fluid such as an oil having a load pressure. The pressure source port 22 is in communication with the one axial end side of the spool receiving hole 21 and is connected to a pressure source such as a pump.

In a side surface of the valve body 20, a control port 23 is formed to face the spool receiving hole 21. The control port 23 extends perpendicularly to the axial direction. The control port 23 is connected to a hydraulic apparatus (not shown) to be supplied with an oil for control. When the spool 30 is in a supply position (see Fig. 2), the control port 23 communicates with the pressure source port 22, and the oil having the load pressure flows out through the control port 23. When the spool 30 is in a neutral position (see Fig. 1), the control port 23 is closed by the spool 30 and does not communicate with the pressure source port 22.

A pilot source port 24 is disposed in the other axial end side of the valve body 20. The pilot source port 24 receives the flow of an oil having a pilot pressure. The pilot pressure is significantly smaller than the load pressure. The pilot source port 24 is in communication with the other axial end side of the spool receiving hole 21 and is connected to a pilot source such as an electromagnetic valve.

Further, a drain port 25 is formed in the side surface of the valve body 20. The drain port 25 is in communication with the spool receiving hole 21 and is connected to, for example, a tank T for storing the oil.

In the inner side surface of the valve body 20, there are provided an inner circumferential groove 21a, a shoulder movement space 21b, and a drain port communication space 21c. The inner circumferential groove 21a, the shoulder movement space 21b, and the drain port communication space 21c are arranged in this order from the one axial end side toward the other axial end side. Each of the inner circumferential groove 21a, the shoulder movement space 21b, and the drain port communication space 21c constitutes a part of the spoo I receiving hole 21.

The inner circumferential groove 21a extends annularly over the entire circumference of the inner side surface of the valve body 20 and communicates with the control port 23. The shoulder movement space 21b allows a shoulder 34 (described later) to move therein and communicates with the pressure sou rce port 22 via a first communication hole 35 (described later). The drain port communication space 21c extends annularly over the entire circumference of the inner side surface of the valve body 20 and communicates with the drain port 25. The drain port communication space 21c allows an other-end side step 37 of the spool 30 to move therein.

Further provided in the inner side surface of the valve body 20 are a first step 26, a second step 27, and a third step 28. The first step 26 is positioned on the other axial end side of the drain port communication space 21c, and when the spool 30 moves most toward the other axial end side, the first step 26 contacts with the other-end side step 37 of the spool 30. The second step 27 is positioned on the other axial end side of the shoulder movement space 21b and is joined to the other end side of a spring 40 (described later). The third step 28 is positioned on the one axial end side of the shoulder movement space 21b. When the spool 30 moves most toward the one axial end side, the third step 28 contacts with a second acting surface 34b (described later) of the spool 30.

The valve body 20 is not necessarily constituted by a single member, but may be constituted by a plurality of members joined together.

The spool 30 moves in the spool receiving hole 21 of the valve body 20 between the neutral position (Fig. 1) and the supply position (Fig. 2). As shown in Fig. 1, when the pilot pressure is not supplied through the pilot source port 24 of the valve body 20, the spool 30 enters the neutral position on the one axial end side, and the spool 30 closes the control port 23. On the other hand, as shown in Fig. 2, when the pilot pressure is supplied through the pilot source port 24 of the valve body 20, the spool 30 moves toward the other axial end side and enters the supply position, and the control port 23 is opened to be in communication with the pressure source port 22.

The spool 30 has a load pressure acting surface 31 having a circular shape and formed on the one axial end side and a pilot pressure acting surface 32 having a circular shape and formed on the other axial end side. That is, the load pressure acting surface 31 and the pilot pressure acting surface 32 are opposed to each other in the axial direction. The load pressure acting surface 31 is in communication with the pressure source port 22 of the valve body 20 and is acted on by the oil having the load pressure from the pressure source. The pilot pressure acting surface 32 is in communication with the pilot source port 24 of the valve body 20 and is acted on by the oil having the pilot pressure from the pilot source.

The spool 30 includes a spool body 33 and the shoulder 34 joined to a side surface of the spool body 33. The spool body 33 extends in the spool receiving hole 21 from the one axial end side toward the other axial end side. The spool body 33 is constituted by a solid member except for a first communication hole 35 and a second communication hole 36 (described later).

The shoulder 34 constitutes a portion radially enlarged from the spool body 33. The shoulder 34 extends annularly over the entire circumference of the spool body 33 and is integrated with the spool body 33.

The shoulder 34 has a first acting surface 34a positioned on the other axial end side and a second acting surface 34b positioned on the one axial end side. The first acting surface 34a and the second acting surface 34b are opposed to each other in the axial direction.

The spool 30 has a first communication hole 35 formed therein to communicate between the load pressure acting surface 31 and the first acting surface 34a. The first communication hole 35 includes an axial portion 35a extending in the axial direction and a peripheral portion 35b connected with the axial portion 35a and extending in the peripheral direction. The axial portion 35a is open to the load pressure acting surface 31. The peripheral portion 35b is open to a side surface of the spool body 33 on the other axial end side of the shoulder 34. The peripheral portion 35b is in communication with the other axial end side of the shoulder movement space 21b. In this way, the load pressure acting surface 31 and the first acting surface 34a communicate with each other, and therefore, a load pressure acting on the load pressure acting surface 31 toward the other axial end side (the negative side in the direction X) also acts on the first acting surface 34a toward the one axial end side (the positive side in the direction X).

Further, the spool 30 has a second communication hole 36 formed therein to communicate between the pilot pressure acting surface 32 and the second acting surface 34b. The second communication hole 36 includes an axial portion 36a extending in the axial direction and a peripheral portion 36b connected with the axial portion 36a and extending in the peripheral direction. The axial portion 36a is open to the pilot pressure acting surface 32. The peripheral portion 36b is open to a side surface of the spool body 33 in the second acting surface 34b and is in communication with the one axial end side of the shoulder movement space 21b. A part of the peripheral portion 36b is constituted by a peripheral groove formed in the second acting surface 34b. In this way, the pilot pressure acting surface 32 and the second acting surface 34b communicate with each other, and therefore, a pilot pressure acting on the pilot pressure acting surface 32 toward the one axial end side (the positive side in the direction X) also acts on the second acting surface 34b toward the other axial end side (the negative side in the direction X).

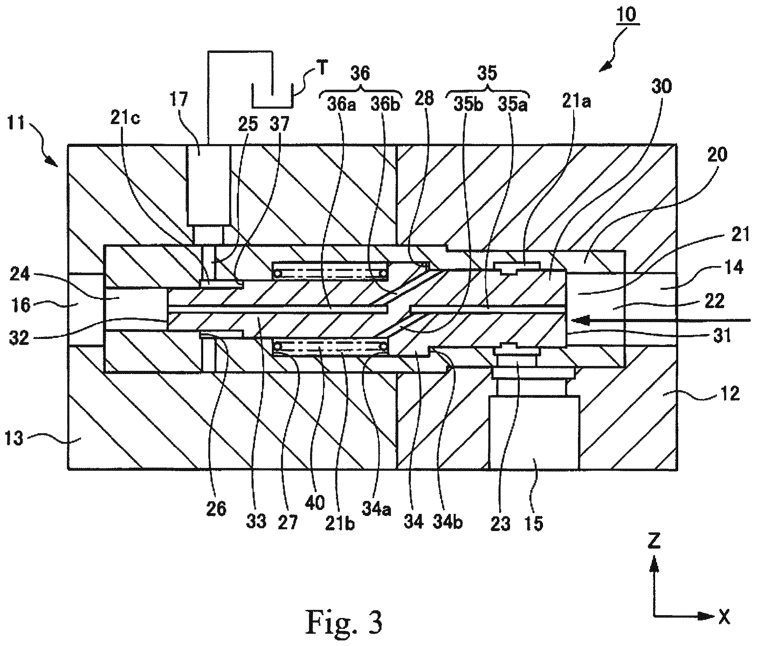

It is also possible that the peripheral portion 35b of the first communication hole 35 and the peripheral portion 36b of the second communication hole 36 are replaced with oblique portions extending obliquely to the axial direction. That is, as in the variation shown in Fig. 3, the axial portion 35a of the first communication hole 35 and the axial portion 36a of the second communication hole 36 may extend in the same axis (the central axis of the spool 30), and the peripheral portions 35b, 36b may extend obliquely to the axial direction from the axial portions 35a, 36a, respectively. In this way, the axial portions 35a, 36a may be arranged in the same axis thereby to downsize the spool 30. The arrangement in the variation shown in Fig. 3 may also be applied to second and third embodiments described later.

Referring again to Figs. 1 and 2, a spring (first biasing member) 40 is interposed between the valve body 20 and the spool 30 so as to press the spool 30 toward the one axial side. The spring 40 is a compression spring. More specifically, one end of the spring 40 is joined to the first acting surface 34a of the shoulder 34, and the other end of the spring 40 is joined to the second step 27 of the valve body 20. Thus, the spring 40 presses the spool 30 via the shoulder 34 toward the one axial end side.

In the embodiment, the area of the load pressure acting surface 31 of the spool 30 is equal to the area of the first acting surface 34a of the shoulder 34. The area of the load pressure acting surface 31 refers to the entire area of the load pressure acting surface 31 having, for example, a circular shape, including the area of the opening of the first communication hole 35. The area of the first acting surface 34a refers to the entire area of the first acting surface 34a having, for example, an annular shape. In this way, the load pressure acting surface 31 and the first acting surface 34a have the same area, and therefore, the force applied by the load pressure to the load pressure acting surface 31 (the force applied toward the other axial end side (the negative side in the direction X)) is balanced with the force applied by the load pressure to the first acting surface 34a (the force applied toward the one axial end side (the positive side in the direction X)). Therefore, in a neutral state, the spool 30 is urged toward the one axial end side only by the pressing force of the spring 40.

The area of the pilot pressure acting surface 32 is smaller than the area of the second acting surface 34b of the shoulder 34. The area of the pilot pressure acting surface 32 refers to the entire area of the pilot pressure acting surface 32 having, for example, a circular shape, including the area of the opening of the second communication hole 36. The area of the second acting surface 34b refers to the entire area of the second acting surface 34b having, for example, an annular shape. In this way, the area of the pilot pressure acting surface 32 is smaller than the area of the second acting surface 34b, and therefore, when the pilot pressure is applied to the pilot pressure acting surface 32, the spool 30 can be moved from the one axial end side (the positive side in the direction X) toward the other axial end side (the negative side in the direction X) against the biasing force of the spring 40. Therefore, when the pilot pressure is applied to the pilot pressure acting surface 32, the spool 30 can be displaced from the neutral state to the supply position. The area of the second acting surface 34b is smaller than the area of the first acting surface 34a described above.

The valve body 20 is housed in a block 11. The block 11 includes a first block portion 12 on the one axial end side and a second block portion 13 on the other axial end side. The block 11 has formed therein a pressure source channel 14, a control channel 15, a pilot source channel 16, and a first drain channel 17. The pressure source channel 14, the control channel 15, the pilot source channel 16, and the first drain channel 17 communicate with the pressure source port, the control port 23, the pilot source port 24, and the drain port 25 of the valve body 20, respectively.

Operation in the embodiment configured as above will be hereinafter described.

First, when an oil having the pilot pressure is not supplied through the pilot source port 24 of the valve body 20, a tank pressure (a low pressure) acts on the pilot pressure acting surface 32 of the spool 30 toward the one axial end side. At this time, the tank pressure also acts on the second acting surface 34b of the shoulder 34. Further, since the drain port communication space 21 communicates with the drain port 25, the tank pressure also acts on the other-end side step 37 of the valve body 20.

An oil having the load pressure is supplied through the pressure source port 22 of the valve body 20. Therefore, the load pressure acts on the load pressure acting surface 31 of the spool 30 toward the other axial end side. The oil having the load pressure also flows from the load pressure acting surface 31 into the shoulder movement space 21b through the first communication hole 35. Therefore, the load pressure acts on the first acting surface 34a of the shoulder 34 toward the one axial end side.

As described above, the area of the load pressure acting surface 31 of the spool 30 is equal to the area of the first acting surface 34a of the shoulder 34. Therefore, the pressure acting on the load pressure acting surface 31 of the spool 30 is balanced with the pressure acting on the first acting surface 34a of the shoulder 34, and thus the spool 30 is in the neutral position (see Fig. 1). At this time, the control port 23 is closed by the spool 30 and does not communicate with the pressure source port 22. Accordingly, the oil having the load pressure from the pressure source such as a pump is not supplied to the hydraulic apparatus connected to the control port 23. Meanwhile, since the spring 40 presses the spool 30 toward the one axial end side, the second acting surface 34b of the shoulder 34 contacts with the third step 28 of the valve body 20, thereby stopping the spool 30.

In this way, since the area of the load pressure acting surface 31 of the spool 30 is equal to the area of the first acting surface 34a of the shoulder 34, the spool 30 can be retained in the neutral position irrespective of the magnitude of the load pressure.

In this state, when an oil having the pilot pressure is supplied through the pilot source port 24 of the valve body 20, the pilot pressure acts on the pilot pressure acting surface 32 of the spool 30 toward the one axial end side. At this time, the oil having the pilot pressure also flows from the pilot pressure acting surface 32 into the shoulder movement space 21b through the second communication hole 36. Therefore, the pilot pressure also acts on the second acting surface 34b of the shoulder 34. As described above, the area of the pilot pressure acting surface 32 is smaller than the area of the second acting surface 34b of the shoulder 34. Therefore, the pilot pressure acting on the second acting surface 34b of the shoulder 34 causes the spool 30 to move from the one axial end side toward the other axial end side against the biasing force of the spring 40.

The spool 30 moves toward the other axial end side to reach the supply position (see Fig. 2). At this time, the load pressure acting surface 31 of the spool 30 moves to directly above the control port 23, and thus the control port 23 is opened and in communication with the pressure source port 22. Accordingly, the oil is supplied from the pressure source such as a pump connected to the pressure source port 22 to the hydraulic apparatus connected to the control port 23. The amount of oil supplied from the pressure source to the hydraulic apparatus when the spool 30 is in the supply position can be varied in accordance with the overlapping area of the spool 30 and the control port 23. Subsequently, the other-end side step 37 of the spool 30 contacts with the first step 26 of the valve body 20, and the spool 30 stops moving.

During this operation, the pressure acting on the load pressure acting surface 31 of the spool 30 is constantly balanced with the pressure acting on the first acting surface 34a of the shoulder 34, and thus the magnitude of the load pressure acting on the load pressure acting surface 31 does not affect the movement of the spool 30.

Subsequently, the supply of the pilot pressure from the pilot source port 24 is stopped to cause the tank pressure to act on the pilot pressure acting surface 32. Because of the biasing force of the spring 40, the spool 30 moves from the supply position to the neutral position to close the control port 23. Thus, no oil is supplied to or discharged from the hydraulic apparatus connected to the control port 23.

As described above, in the embodiment, the spool 30 has the load pressure acting surface 31 and the pilot pressure acting surface 32. The load pressure acting surface 31 is formed on the one axial end side and acted on by the load pressure, and the pilot pressure acting surface 32 is formed on the other axial end side and acted on by the pilot pressure. Further, the direction in which the oil having the load pressure is supplied to the control port 23 is aligned with the direction in which the oil having the pilot pressure is supplied to the pilot source port 24. This arrangement makes it possible to downsize the spool valve 10 and configure it such that the direction of action of the pilot pressure is opposite to the direction of action of the load pressure. Therefore, a fluid apparatus having the spool valve 10 neither requires a large space nor have a large size, unlike a fluid apparatus having the conventional spool valve, in which the pilot pressure is supplied from a direction perpendicular to the axial direction, for example.

In the embodiment, the area of the load pressure acting surface 31 is equal to the area of the first acting surface 34a of the shoulder 34. Therefore, the pressure acting on the load pressure acting surface 31 of the spool 30 can be balanced with the pressure acting on the first acting surface 34a of the shoulder 34, irrespective of the magnitude of the load pressure.

In the embodiment, the area of the pilot pressure acting surface 32 is smaller than the area of the second acting surface 34b of the shoulder 34. Therefore, when the pilot pressure is applied to the pilot pressure acting surface 32, the spool 30 can be moved from the neutral state to the supply position.

In the embodiment, when the pilot pressure acts on the pilot pressure acting surface 32, the pilot pressure acts on the second acting surface 34b of the shoulder 34 to move the spool 30 toward the other axial end side. Thus, it is possible to control the movement of the spool 30 according to whether or not the pilot pressure acts thereon.

In the embodiment, the spring 40 presses the spool 30 toward the one axial end side. Therefore, when the pilot pressure does not act on the pilot pressure acting surface 32, the shoulder 34 is pressed toward the one axial end side, and the spool 30 is retained in the neutral position.

### Second Embodiment

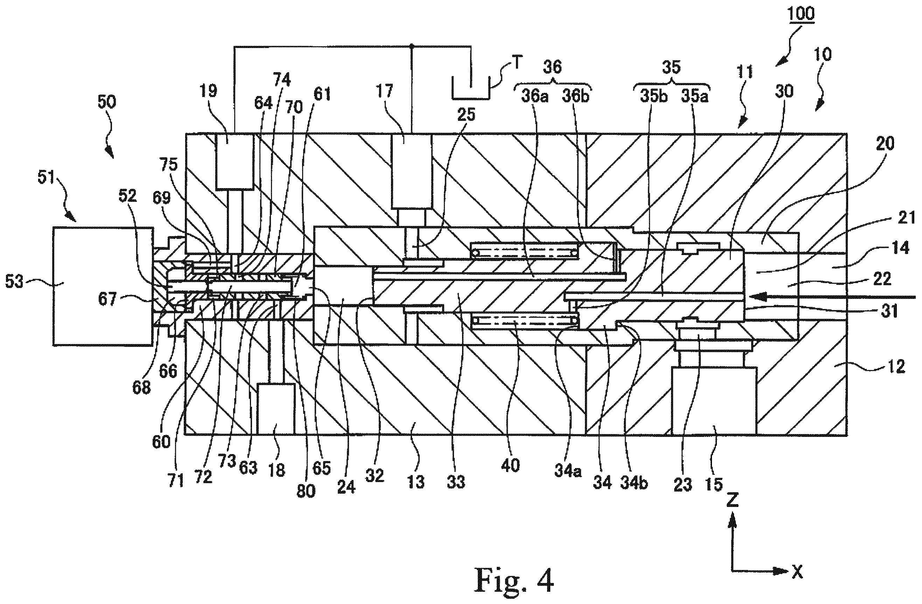

Next, the second embodiment of the invention will be described. Figs. 4 to 6 are sectional views showing a valve system according to the embodiment. The second embodiment shown in Figs. 4 to 6 are distinctive in that an electromagnetic proportional valve is provided on the other axial end side of the spool. In other respects, this embodiment is configured in substantially the same way as the first embodiment described above. In Figs. 4 to 6, the same elements as in the first embodiment are denoted by the same reference numerals and detailed descriptions thereof will be omitted.

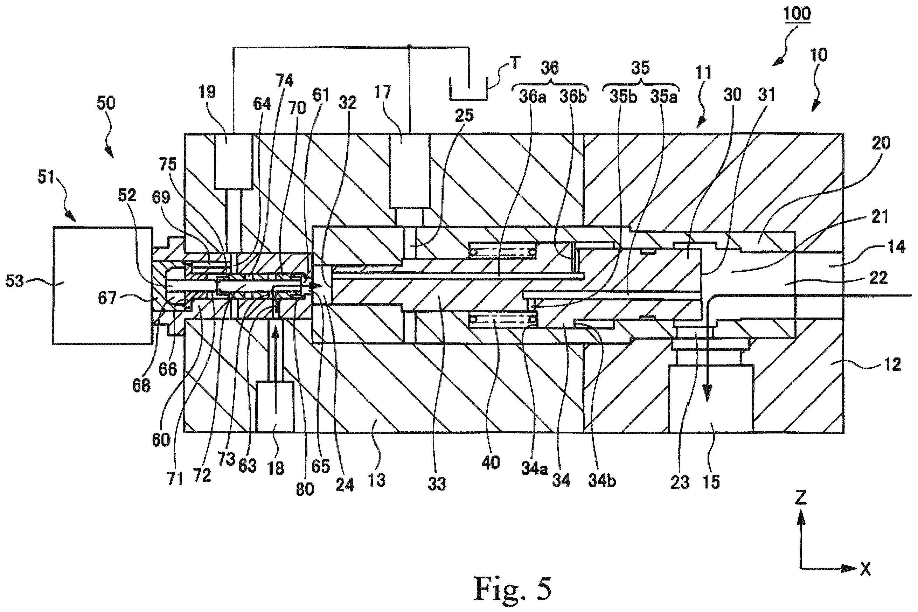

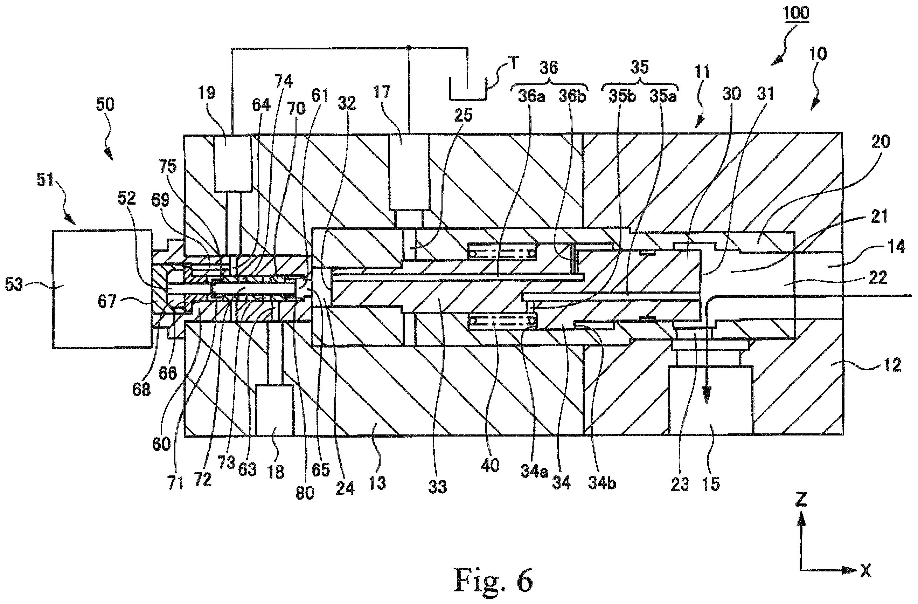

In Fig. 4, the spool of the spool valve is in the neutral position and an electromagnetic proportional valve spool of the electromagnetic proportional valve is in the discharge position. In Fig. 5, the spool of the spool valve is in the supply position and the electromagnetic proportional valve spool of the electromagnetic proportional valve is in the supply position. In Fig. 6, the spool of the spool valve is in the supply position and the electromagnetic proportional valve spool of the electromagnetic proportional valve is in the neutral position.

As shown in Figs. 4 to 6, the valve system 100 according to the embodiment includes the spool valve 10 and the electromagnetic proportional valve 50 connected to the spool valve 10.

The spool valve 10 is substantially the same as the spool valve 10 in the first embodiment and thus is not described here.

The electromagnetic proportional valve 50 is connected to the other axial end side of the spool valve 10 and is configured to cause the pilot pressure to act on the pilot pressure acting surface 32 of the spool valve 10. The electromagnetic proportional valve 50 is retained in any of a supply position, a discharge position, and a neutral position. In the supply position, the electromagnetic proportional valve 50 allow communication between a pilot pressure source as a source for supplying the oil and the pilot source channel 16 of the spool valve 10, and the oil is supplied from the pilot pressure source to the spool valve 10. In the discharge position, the electromagnetic proportional valve 50 allow communication between the tank T for storing the oil and the pilot source channel 16 of the spool valve 10, and the oil is discharged from the pilot source channel 16 into the tank T. In the neutral position, the electromagnetic proportional valve 50 shuts off the spool valve 10 from the pilot pressure source and the tank T.

As shown in Figs. 4 to 6, the main components of the electromagnetic proportional valve 50 include an electromagnetic proportional valve body 60, an electromagnetic proportional valve spool 70, and a drive device 51. The electromagnetic proportional valve spool 70 is housed in the electromagnetic proportional valve body 60 so as to be movable in the axial direction, and the drive device 51 is disposed on the electromagnetic proportional valve body 60 and configured to press the electromagnetic proportional valve spool 70 toward the one axial end side. The electromagnetic proportional valve 50 switches a flow path between the supply position, the discharge position, and the neutral position by moving the electromagnetic proportional valve spool 70.

The drive device 51 drives the electromagnetic proportional valve spool 70 to control the position of the electromagnetic proportional valve spool 70. The drive device 51 includes a drive rod 52 and a drive unit 53 retaining the drive rod 52. The drive rod 52 is retained by the drive unit 53 so as to be able to advance and retract along the central axis thereof. The drive unit 53 controls driving of the drive rod 52 in the axial direction (the direction X). The drive device 51 shown is configured as a solenoid actuator.

In the drive device 51 configured as described above, when an excitation current flows in a solenoid coil (not shown) of the drive unit 53, the drive rod 52 moves toward the one axial end side (the positive side in the direction X) against the biasing force of a spring (a biasing member) 80 provided in the electromagnetic proportional valve body 60. The amount of movement of the drive rod 52 is proportional to the magnitude of the excitation current in the solenoid coil of the drive unit 53, if no reaction force is applied from the electromagnetic proportional valve spool 70. In the example shown, the drive rod 52 projects from the drive unit 53 in proportional to the magnitude of the excitation current.

Next, the electromagnetic proportional valve body 60 will be described. The electromagnetic proportional valve body 60 has a spool receiving hole 61. The electromagnetic proportional valve spool 70, which has a shaft-like shape, is movable in the axial direction in the spool receiving hole 61. The drive rod 52 can advance into and retract from the spool receiving hole 61. Further, the spring 80 is disposed in the electromagnetic proportional valve body 60. The spring 80 biases the electromagnetic proportional valve spool 70 toward the drive rod 52. As a result, the distal end portion of the drive rod 52 contacts with the electromagnetic proportional valve spool 70. In the example shown, the spring 80 is a compression spring. The spring 80 retains the contact between the drive rod 52 and the electromagnetic proportional valve spool 70. The biasing force of the spring 80 is significantly smaller than a thrust applied from the drive rod 52 to the electromagnetic proportional valve spool 70.

When the drive rod 52 advances from the drive unit 53, the electromagnetic proportional valve spool 70 is pressed by the drive rod 52 and moves with respect to the electromagnetic proportional valve body 60. When the drive rod 52 retracts into the drive unit 53, the electromagnetic proportional valve spool 70 is pressed by the spring 80 and moves with respect to the electromagnetic proportional valve body 60 while contacting with the drive rod 52.

The electromagnetic proportional valve body 60 has a pilot pressure source port 63, a drain port 64, and a control port 65 formed therein. The electromagnetic proportional valve spool 70 has channels 72, 73, 74 formed therein. When the electromagnetic proportional valve spool 70 is in the discharge position shown in Fig. 4, the control port 65 communicates with the drain port 64, and the pilot pressure source port 63 is shut off from the other ports 64, 65. When the electromagnetic proportional valve spool 70 is in the supply position shown in Fig. 5, the control port 65 communicates with the pilot pressure source port 63, and the drain port 64 is shut off from the other ports 63, 65. When the electromagnetic proportional valve spool 70 is in the neutral position shown in Fig. 6, each of the ports 63, 64, 65 is shut off from the other ports.

The control port 65 is open to the spool receiving hole 61 and outputs the pilot pressure to the pilot source port 24 of the spool valve 10. Thus, the control port 65 supplies the oil having the pilot pressure to the spool valve 10. The pilot pressure source port 63 is open to the spool receiving hole 61 and communicates with the pilot pressure source such as a pump. The drain port 64 is open to the spool receiving hole 61 and communicates with the tank T for storing the oil. Accordingly, in the electromagnetic proportional valve 50 in which the electromagnetic proportional valve spool 70 is in the supply position, the oil is supplied from the pilot pressure source to the spool valve 10, and in the electromagnetic proportional valve 50 in which the electromagnetic proportional valve spool 70 is in the discharge position, the oil is discharged from the spool valve 10 to the tank T. In the electromagnetic proportional valve 50 in which the electromagnetic proportional valve spool 70 is in the neutral position, the oil in the spool valve 10 is retained.

In the example shown, the electromagnetic proportional valve body 60 has a first core 66 and a second core 67 fixed thereto. The first core 66 has a through-hole passed by the drive rod 52 of the drive device 51 for advancement and retraction. The first core 67 has a through-hole penetrated by the drive rod 52 of the drive device 51 for advancement and retraction. The distal end portion of the drive rod 52 is positioned in the spool receiving hole 61.

A spare chamber 68 is defined by the first core 66, the second core 67, and the electromagnetic proportional valve body 60. Between the drain po rt 64 and the spare chamber 68, there is provided a connecting channel 69. The connecting channel 69 is formed in the electromagnetic proportional valve body 60. The connecting channel 69 communicates between the spare chamber 68 and the drain port 64.

Next, the electromagnetic proportional valve spool 70 will be described. The electromagnetic proportional valve spool 70 is pressed on the one axial end side thereof by the spring 80 and thus is biased toward the drive rod 52. The electromagnetic proportional valve spool 70 contacts on the other axial end side thereof with the distal end portion of the drive rod 52.

The electromagnetic proportional valve spool 70 has formed therein a main channel 72 extending in the axial direction. The main channel 72 is open to the control port 65. The electromagnetic proportional valve spool 70 also has formed therein a first branch channel 73 and a second branch channel 74, each connecting with the main channel 72. When the electromagnetic proportional valve spool 70 is in the supply position, the first branch channel 73 communicates between the pilot pressure source port 63 and the main channel 72. When the electromagnetic proportional valve spool 70 is in the discharge position, the second branch channel 74 communicates between the drain port 64 and the main channel 72.

Further, the electromagnetic proportional valve spool 70 has formed therein a third branch channel 75 that communicates between the main channel 72 and an action space 71. Accordingly, the action space 71 is in communication with the control port 65 via the third branch channel 75 and the main channel 72. The action space 71 is retained at the pressure of the oil in the control port 65.

In the embodiment, the block 11 further has a pilot pressure supply channel 18 and a second drain channel 19 formed therein. The pilot pressure supply channel 18 and the second drain channel 19 communicate with the pilot pressure source port 63 and the drain port 64 of the electromagnetic proportional valve body 60, respectively.

Next, operation in the embodiment configured as above will be hereinafter described.

First, when the solenoid coil of the drive unit 53 of the electromagnetic proportional valve 50 is not excited, the drive rod 52 is retracted toward the drive unit 53 by the biasing force of the spring 80. The electromagnetic proportional valve spool 70 is contacted with the drive rod 52 by the biasing force of the spring 80 at the discharge position shown in Fig. 4. At this time, the control port 65 is in communication with the drain port 64 via the main channel 72 and the second branch channel 74 of the electromagnetic proportional valve spool 70. Accordingly, the pilot source port 24 of the spool valve 10 is in communication with the tank T connected to the drain port 64.

In this state, the pilot pressure does not act on the pilot pressure acting surface 32 of the spool valve 10. Therefore, the spool 30 of the spool valve 10 is retained in the neutral position (see the description of the first embodiment for details of the operation of the spool 30). At this time, the control port 23 is closed by the spool 30, and therefore, the oil having the load pressure from the pressure source such as a pump is not supplied to the hydraulic apparatus connected to the control port 23.

In this state, when the solenoid coil of the drive unit 53 is excited, the drive rod 52 advances from the drive unit 53 and drives the electromagnetic proportional valve spool 70. The electromagnetic proportional valve spool 70 moves from the discharge position to the neutral position. When the electromagnetic proportional valve spool 70 is in the neutral position, the communication between the second branch channel 74 and the drain port 64 is shut off while the communication between the first branch channel 73 and the pilot pressure source port 63 remains shut off. Therefore, the control port 65 is shut off from both the pilot pressure source port 63 and the drain port 64. Accordingly, no oil is supplied to or discharged from the spool valve 10 connected to the control port 65.

When a larger excitation current flows in the solenoid coil of the drive unit 53, the drive rod 52 further advances the electromagnetic proportional valve spool 70, and the first branch channel 73 of the electromagnetic proportional valve spool 70 moves to directly above the pilot pressure source port 63. In the supply position shown in Fig. 5, the control port 65 is in communication with the pilot pressure source port 63 via the main channel 72 and the first branch channel 73 of the electromagnetic proportional valve spool 70. Accordingly, the oil having the pilot pressure is supplied from the pilot pressure source such as a pump connected to the pilot pressure source port 63 to the pilot source port 24 of the spool valve 10 connected to the control port 65.

Meanwhile, the control port 65 is in communication with the action space 71 via the main channel 72 and the third branch channel 75 of the electromagnetic proportional valve spool 70. Accordingly, the action space 71 receives a pressure equal to the pilot pressure output to the control port 65. In the action space 71, the distal end portion of the drive rod 52 is exposed in the axial direction. Therefore, the pilot pressure constantly acts on the drive rod 52 in a direct manner in a direction opposite to the thrust applied to the electromagnetic proportional valve spool 70 by the drive rod 52.

As described above, since the oil having the pilot pressure is supplied from the electromagnetic proportional valve 50 to the spool valve 10, the pilot pressure acts on the pilot pressure acting surface 32 of the spool valve 10. Therefore, the spool 30 of the spool valve 10 is displaced from the neutral position to the supply position (see the description of the first embodiment for details of the operation of the spool 30). The movement of the spool 30 causes the control port 23 to be opened and in communication with the pressure source port 22. Accordingly, the oil is supplied from the pressure source such as a pump connected to the pressure source port 22 to the hydraulic apparatus connected to the control port 23.

When the excitation of the solenoid coil of the drive unit 53 is reduced, the drive rod 52 is moved back toward the drive unit 53 to some degree. At this time, the electromagnetic proportional valve spool 70 reaches the neutral position shown in Fig. 6. When the electromagnetic proportional valve spool 70 is in the neutral position, the communication between the first branch channel 73 and the pilot pressure source port 63 is shut off while the communication between the second branch channel 74 and the drain port 64 remains shut off. Therefore, the control port 65 is shut off from both the pilot pressure source port 63 and the drain port 64. Accordingly, the control port 65 is retained at the pilot pressure, and the pilot pressure acting surface 32 of the spool valve 10 remains acted on by the pilot pressure. Accordingly, the spool 30 of the spool valve 10 is retained in the supply position, and the oil continues to be supplied from the pressure source such as a pump connected to the pressure source port 22 to the hydraulic apparatus connected to the control port 23.

In the embodiment, it is possible with a simple arrangement to drive the electromagnetic proportional valve spool 70 with a control pressure and thereby control the spool valve 10. In other words, the arrangement to drive the electromagnetic proportional valve spool 70 with the pilot pressure can be simplified significantly. Thus, the electromagnetic proportional valve spool 70 can be simplified significantly.

### Third Embodiment

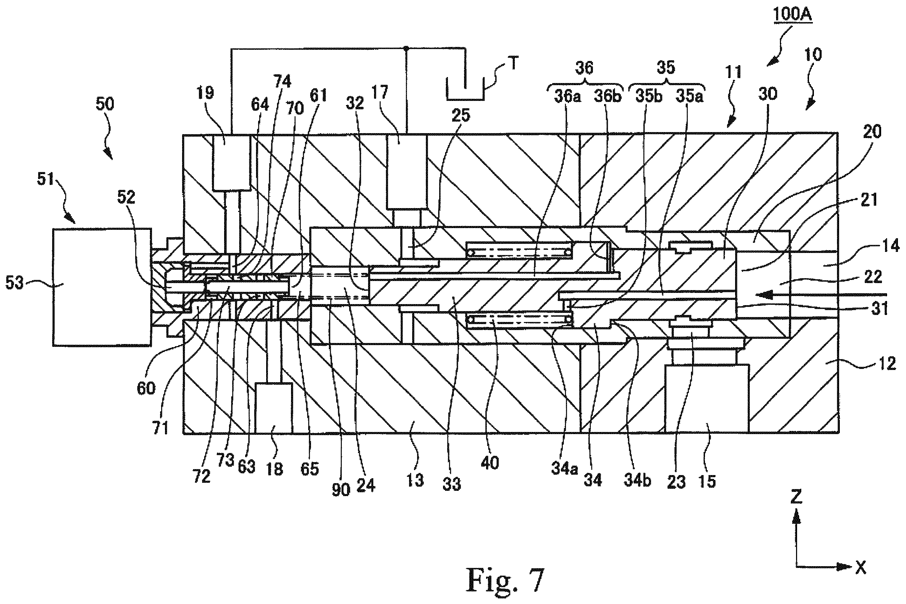

Next, the third embodiment of the invention will be described. Figs. 7 to 10 are sectional views showing a valve system according to the embodiment. The third embodiment shown in Figs. 7 to 10 are distinctive in that the spring 80 disposed in the electromagnetic proportional valve body 60 is replaced with a feedback spring 90 connecting between the spool 30 of the spool valve 10 and the electromagnetic proportional valve spool 70 of the electromagnetic proportional valve 50. In other respects, this embodiment is configured in substantially the same way as the second embodiment described above. In Figs. 7 to 10, the same elements as in the first and second embodiments are denoted by the same reference numerals and detailed descriptions thereof will be omitted.

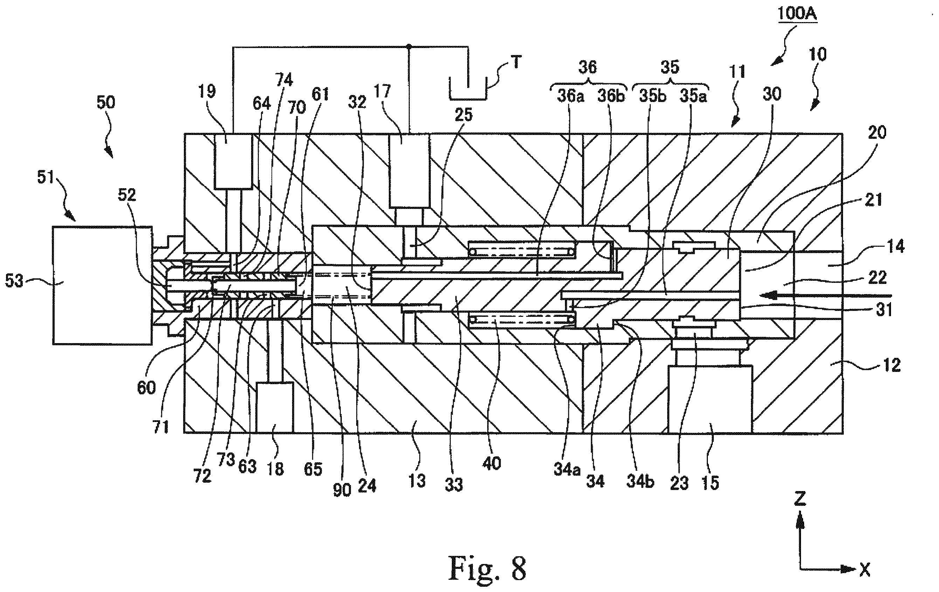

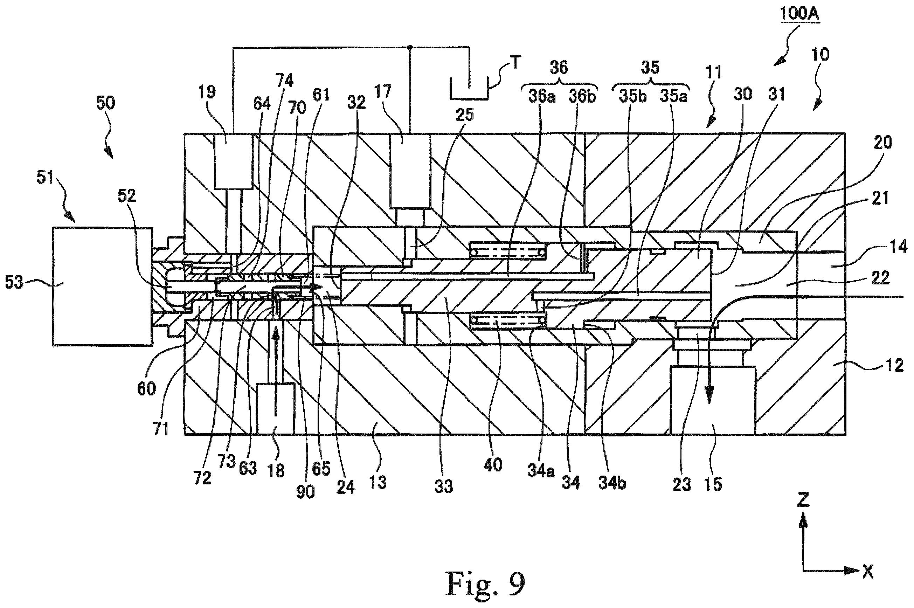

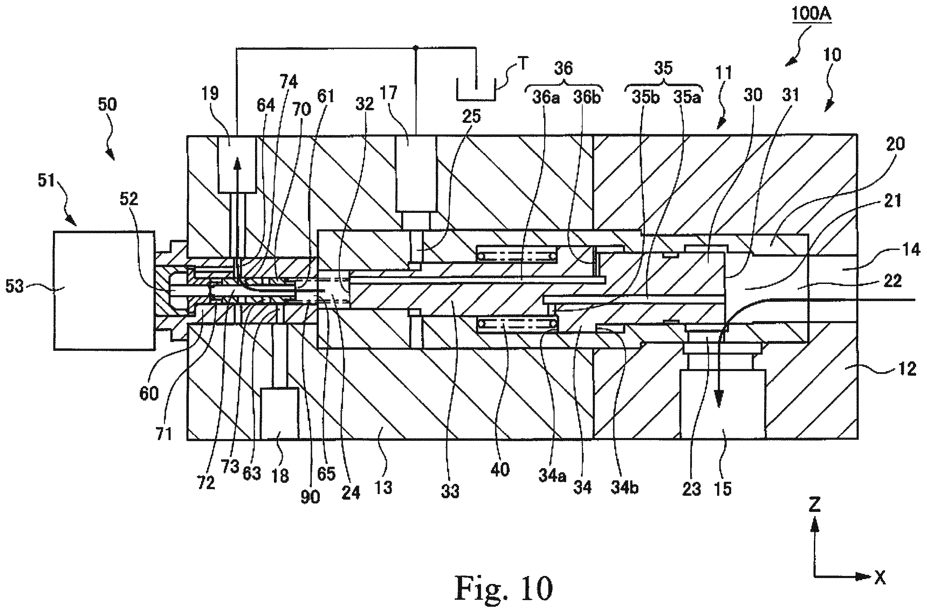

In Fig. 7, the spool of the spool valve is in the neutral position and the electromagnetic proportional valve spool of the electromagnetic proportional valve is in the discharge position. In Fig. 8, the spool of the spool valve is in the neutral position and the electromagnetic proportional valve spool of the electromagnetic proportional valve is in the neutral position. In Fig. 9, the spool of the spool valve is in the supply position and the electromagnetic proportional valve spool of the electromagnetic proportional valve is in the supply position. In Fig. 10, the spool of the spool valve is in the supply position and the electromagnetic proportional valve spool of the electromagnetic proportional valve is in the discharge position.

As shown in Figs. 7 to 10, the valve system 100A according to the embodiment includes the spool valve 10 and the electromagnetic proportional valve 50 connected to the spool valve 10. The spool valve 10 and the electromagnetic proportional valve 50 are substantially the same as those in the first embodiment and the second embodiment and thus are not described here.

In the embodiment, the spool 30 of the spool valve 10 and the electromagnetic proportional valve spool 70 of the electromagnetic proportional valve 50 are connected to each other by the feedback spring (a second biasing member) 90. The feedback spring 90 is a compression spring. More specifically, the feedback spring 90 elastically connects between the pilot pressure acting surface 32 of the spool 30 and the one axial end side of the electromagnetic proportional valve spool 70. With this arrangement, feedback control of the spool 30 of the spool valve 10 is possible.

Next, operation in the embodiment configured as above will be hereinafter described.

First, when the solenoid coil of the drive unit 53 of the electromagnetic proportional valve 50 is not excited, the drive rod 52 is retracted toward the drive unit 53 by the biasing force of the feedback spring 90. At this time, the electromagnetic proportional valve spool 70 is in the discharge position shown in Fig. 7. The control port 65 is in communication with the drain port 64 via the main channel 72 and the second branch channel 74 of the electromagnetic proportional valve spool 70. Accordingly, the pilot source port 24 of the spool valve 10 is in communication with the tank T connected to the drain port 64.

In this state, the pilot pressure does not act on the pilot pressure acting surface 32 of the spool valve 10. Therefore, the spool 30 of the spool valve 10 is retained in the neutral position (see Fig. 7). At this time, the control port 23 is closed by the spool 30, and therefore, the oil having the load pressure from the pressure source such as a pump is not supplied to the hydraulic apparatus connected to the control port 23.

In this state, when the solenoid coil of the drive unit 53 is excited, the drive rod 52 advances from the drive unit 53 and drives the electromagnetic proportional valve spool 70. The electromagnetic proportional valve spool 70 moves from the discharge position to the neutral position (see Fig. 8). When the electromagnetic proportional valve spool 70 is in the neutral position, the communication between the second branch channel 74 and the drain port 64 is shut off while the communication between the first branch channel 73 and the pilot pressure source port 63 remains shut off. Therefore, the control port 65 is shut off from both the pilot pressure source port 63 and the drain port 64. Accordingly, no oil is supplied to or discharged from the spool valve 10 connected to the control port 65.

In this state, the pilot pressure still does not act on the pilot pressure acting surface 32 of the spool valve 10. Therefore, the spool 30 of the spool valve 10 is retained in the neutral position by the pressing force of the spring 80 (see

Fig. 8).

When a larger excitation current flows in the solenoid coil of the drive unit 53, the drive rod 52 further advances the electromagnetic proportional valve spool 70, and the first branch channel 73 of the electromagnetic proportional valve spool 70 moves to directly above the pilot pressure source port 63. Therefore, as shown in Fig. 9, the electromagnetic proportional valve spool 70 reaches the supply position. In the supply position, the control port 65 is in communication with the pilot pressure source port 63 via the main channel 72 and the first branch channel 73 of the electromagnetic proportional valve spool 70. Accordingly, the oil having the pilot pressure is supplied from the pilot pressure source such as a pump connected to the pilot pressure source port 63 to the pilot source port 24 of the spool valve 10 connected to the control port 65.

In this state, the pilot pressure acts on the pilot pressure acting surface 32 of the spool valve 10. Therefore, the spool 30 of the spool valve 10 is moved toward the other axial end side and is displaced from the neutral position to the supply position (see Fig. 9). This movement of the spool 30 of the spool valve 10 causes the control port 23 to be opened and in communication with the pressure source port 22. Accordingly, the oil is supplied from the pressure source such as a pump connected to the pressure source port 22 to the hydraulic apparatus connected to the control port 23.

As the spool 30 is moved toward the other axial end side, the feedback spring 90 is more compressed. Therefore, the biasing force of the feedback spring 90 causes the electromagnetic proportional valve spool 70 to move toward the other axial end side against the pressing force of the drive rod 52. The electromagnetic proportional valve spool 70 moves via the neutral position to the discharge position (see Fig. 10). When the electromagnetic proportional valve spool 70 enters the discharge position, the control port 65 communicates with the drain port 64 and is shut off from the pilot pressure source port 63. Accordingly, the oil from the pilot source port 24 of the spool valve 10 is collected into the tank T connected to the drain port 64, and the pressure acting on the pilot pressure acting surface 32 is reduced.

When the pressure acting on the pilot pressure acting surface 32 is reduced, the spool 30 returns toward the one axial end side by the biasing force of the spring 80. As the spool 30 is moved toward the one axial end side, the feedback spring 90 is more stretched. Therefore, the biasing force of the feedback spring 90 is reduced, and the electromagnetic proportional valve spool 70 is moved toward the one axial end side by the pressing force of the drive rod 52. As a result, the electromagnetic proportional valve spool 70 moves via the neutral position and reaches the supply position again (see Fig. 9). When the electromagnetic proportional valve spool 70 enters the supply position, the control port 65 communicates with the pilot pressure source port 63 and is shut off from the drain port 64. Accordingly, the oil having the pilot pressure is supplied again from the pilot pressure source to the spool valve 10.

In this way, the electromagnetic proportional valve spool 70 moves repeatedly between the supply position (Fig. 9) and the discharge position (Fig. 10), such that the spool 30 is controlled into a position where the biasing force of the feedback spring 90 is balanced with the pressing force of the drive rod 52 applied by the drive device 51.

In the embodiment, the position of the spool 30 is controlled (forcefeedback controlled) such that the spool 30 can be retained in position even when, for example, the pilot pressure applied by the electromagnetic proportional valve 50 is varied by a disturbance, and therefore, the spool 30 can be controlled stably. In addition, since this force feedback control is implemented with a simple arrangement, the valve system 100A can be compact.

## Claims

1. A spool valve, comprising:
a valve body (20); and
a spool (30) housed in the valve body (20) so as to be movable in an axial direction,
the spool (30) having a load pressure acting surface (31) and a pilot pressure acting surface (32), the load pressure acting surface (31) being formed on one axial end side of the spool (30) and configured to be acted on by a load pressure, the pilot pressure acting surface (32) being formed on another axial end side of the spool (30) and configured to be acted on by a pilot pressure,
wherein the spool (30) includes a spool body (33) and a shoulder (34) radially enlarged from the spool body (33),
the shoulder (34) has a first acting surface (34a) positioned on the other axial end side and a second acting surface (34b) positioned on the one axial end side, and
the spool (30) has a first communication hole (35) and a second communication hole (36) formed therein, and
the first communication hole (35) communicating between the load pressure acting surface (31) and the first acting surface (34a) of the shoulder (34), the second communication hole (36) communicating between the pilot pressure acting surface (32) and the second acting surface (34b) of the shoulder (34);
**characterized in that**
an area of the load pressure acting surface (31) is equal to an area of the first acting surface (34a) of the shoulder (34), and
an area of the pilot pressure acting surface (32) is smaller than an area of the second acting surface (34b) of the shoulder (34).

2. The spool valve of claim 1, wherein when the pilot pressure acts on the pilot pressure acting surface (32), the pilot pressure acts on the second acting surface (34b) of the shoulder (34) to move the spool (30) toward the other axial end side.

3. The spool valve of claim 1, further comprising a first biasing member (40) for pressing the spool (30) toward the one axial end side.

4. A valve system comprising:
the spool valve (10) of claim 1 ; and
an electromagnetic proportional valve (50) connected to the other axial end side of the spool valve (10) and configured to cause the pilot pressure to act on the pilot pressure acting surface (32) of the spool valve (10).

5. The valve system of claim 4, wherein
the electromagnetic proportional valve (50) includes an electromagnetic proportional valve body (60), an electromagnetic proportional valve spool (70), and a drive device (51), the electromagnetic proportional valve spool (70) being housed in the electromagnetic proportional valve body (60) so as to be movable in the axial direction, and the drive device (51) being disposed on the electromagnetic proportional valve body (60) and configured to press the electromagnetic proportional valve spool (70) toward the one axial end side, and
the spool (30) of the spool valve (10) and the electromagnetic proportional valve spool (70) of the electromagnetic proportional valve (50) are connected together by a second biasing member (90).

## Patentansprüche

1. Ein Schieberventil, aufweisend:
einen Ventilkörper (20); und
einen Schieber (30), der in dem Ventilkörper (20) in einer axialen Richtung beweglich untergebracht ist,
wobei der Schieber (30) eine auf den Lastdruck einwirkende Fläche (31) und eine auf den Steuerdruck einwirkende Fläche (32) aufweist, wobei die auf den Lastdruck einwirkende Fläche (31) an einer axialen Endseite des Schiebers (30) ausgebildet und so konfiguriert ist, dass sie von einem Lastdruck beaufschlagt wird, wobei die auf den Steuerdruck einwirkende Fläche (32) an einer anderen axialen Endseite des Schiebers (30) ausgebildet und so konfiguriert ist, dass sie von einem Steuerdruck beaufschlagt wird,
wobei der Schieber (30) einen Schieberkörper (33) und eine von dem Schieberkörper (33) radial vergrößerte Schulter (34) aufweist,
die Schulter (34) eine erste Wirkfläche (34a) aufweist, die an der anderen axialen Endseite angeordnet ist, und eine zweite Wirkfläche (34b), die an der einen axialen Endseite angeordnet ist, und
der Schieber (30) ein erstes Verbindungsloch (35) und ein zweites Verbindungsloch (36) aufweist, die in ihm ausgebildet sind, und
das erste Verbindungsloch (35) eine Verbindung zwischen der Lastdruck einwirkenden Fläche (31) und der ersten Wirkfläche (34a) der Schulter (34) herstellt und das zweite Verbindungsloch (36) eine Verbindung zwischen der Steuerdruck einwirkenden Fläche (32) und der zweiten Wirkfläche (34b) der Schulter (34) herstellt;
**dadurch gekennzeichnet, dass**
eine Fläche der Lastdruck einwirkenden Fläche (31) gleich einer Fläche der ersten Wirkfläche (34a) der Schulter (34) ist, und
eine Fläche der auf den Steuerdruck einwirkenden Fläche (32) kleiner ist als eine Fläche der zweiten Wirkfläche (34b) der Schulter (34).

2. Das Schieberventil nach Anspruch 1, wobei, wenn der Vorsteuerdruck auf die Steuerdruck einwirkenden Fläche (32) wirkt, der Vorsteuerdruck auf die zweite Wirkfläche (34b) der Schulter (34) wirkt, um den Schieber (30) in Richtung der anderen axialen Endseite zu bewegen.

3. Das Schieberventil nach Anspruch 1, das ferner ein erstes Vorspannelement (40) aufweist, das den Schieber (30) in Richtung der einen axialen Endseite drückt.

4. Ein Ventilsystem, das aufweist:
das Schieberventil (10) nach Anspruch 1; und
ein elektromagnetisches Proportionalventil (50), das mit der anderen axialen Endseite des Schieberventils (10) verbunden und so konfiguriert ist, dass es bewirkt, dass der Steuerdruck auf die auf den Steuerdruck wirkende Fläche (32) des Schieberventils (10) einwirkt.

5. Das Ventilsystem nach Anspruch 4, wobei
das elektromagnetische Proportionalventil (50) einen elektromagnetischen Proportionalventilkörper (60), einen elektromagnetischen Proportionalventilschieber (70) und eine Antriebsvorrichtung (51) umfasst, wobei der elektromagnetische Proportionalventilschieber (70) in dem elektromagnetischen Proportionalventilkörper (60) so untergebracht ist, dass er in der axialen Richtung beweglich ist, und die Antriebsvorrichtung (51) an dem elektromagnetischen Proportionalventilkörper (60) angeordnet und so konfiguriert ist, dass sie den elektromagnetischen Proportionalventilschieber (70) in Richtung der einen axialen Endseite drückt, und
der Schieber (30) des Schieberventils (10) und der elektromagnetische Proportionalventilschieber (70) des elektromagnetischen Proportionalventils (50) durch ein zweites Vorspannelement (90) miteinander verbunden sind.

## Revendications

1. Distributeur à tiroir cylindrique, comprenant :
un corps de distributeur (20) ; et
un tiroir cylindrique (30) logé dans le corps de distributeur (20) de manière à pouvoir se déplacer dans une direction axiale,
le tiroir cylindrique (30) ayant une surface d'action de pression de charge (31) et une surface d'action de pression pilote (32), la surface d'action de pression de charge (31) étant formée sur un premier côté d'extrémité axiale du tiroir cylindrique (30) et configurée pour subir l'action d'une pression de charge, la surface d'action de pression pilote (32) étant formée sur un autre côté d'extrémité axiale du tiroir cylindrique (30) et configurée pour subir l'action d'une pression pilote,
dans lequel le tiroir cylindrique (30) comprend un corps de tiroir cylindrique (33) et un épaulement (34) élargi radialement par rapport au corps de tiroir cylindrique (33),
l'épaulement (34) a une première surface d'action (34a) positionnée sur l'autre côté d'extrémité axiale et une seconde surface d'action (34b) positionnée sur le premier côté d'extrémités axiale, et
le tiroir cylindrique (30) a un premier trou de communication (35) et un second trou de communication (36) formés dedans, et
le premier trou de communication (35) communiquant entre la surface d'action de pression de charge (31) et la première surface d'action (34a) de l'épaulement (34), et le second trou de communication (36) communiquant entre la surface d'action de pression pilote (32) et la seconde surface d'action (34b) de l'épaulement (34) ;
**caractérisé en ce que**
une aire de la surface d'action de pression de charge (31) est égale à une aire de la première surface d'action (34a) de l'épaulement (34), et
une aire de la surface d'action de pression pilote (32) est inférieure à une aire de la seconde surface d'action (34b) de l'épaulement (34).

2. Distributeur à tiroir cylindrique de la revendication 1, dans lequel, lorsque la pression pilote agit sur la surface d'action de pression pilote (32), la pression pilote agit sur la seconde surface d'action (34b) de l'épaulement (34) pour déplacer le tiroir cylindrique (30) vers l'autre côté d'extrémité axiale.

3. Distributeur à tiroir cylindrique de la revendication 1, comprenant en outre un premier élément de sollicitation (40) pour presser le tiroir cylindrique (30) vers le premier côté d'extrémité axiale.

4. Système de distributeur comprenant :
le distributeur à tiroir cylindrique (10) de la revendication 1 ; et
une vanne proportionnelle électromagnétique (50) reliée à l'autre côté d'extrémité axiale du distributeur à tiroir cylindrique (10) et configurée pour amener la pression pilote à agir sur la surface d'action de pression pilote (32) du distributeur à tiroir cylindrique (10).

5. Système de distributeur de la revendication 4, dans lequel
la vanne proportionnelle électromagnétique (50) comprend un corps de vanne proportionnelle électromagnétique (60), un tiroir cylindrique de vanne proportionnelle électromagnétique (70) et un dispositif d'entraînement (51), le tiroir cylindrique de vanne proportionnelle électromagnétique (70) étant logé dans le corps de vanne proportionnelle électromagnétique (60) de manière à pouvoir se déplacer dans la direction axiale, et le dispositif d'entraînement (51) étant disposé sur le corps de vanne proportionnelle électromagnétique (60) et configuré pour presser le tiroir cylindrique de vanne proportionnelle électromagnétique (70) vers le premier côté d'extrémité axiale, et
le tiroir cylindrique (30) du distributeur à tiroir cylindrique (10) et le tiroir cylindrique de vanne proportionnelle électromagnétique (70) de la vanne proportionnelle électromagnétique (50) sont reliés ensemble par un second élément de sollicitation (90).
